# EUROPEAN PATENT APPLICATION

(11) **EP 2 568 549 A1**
(43) Date of publication of application: **13.03.2013**
(21) Application number: 11180846.5
(22) Date of filing: 12.09.2011
(51) Int. Cl.: H02B 13/045

(54) **Modular housing for medium voltage switchgear**

(71) Applicant: Eaton Industries (Netherlands) B.V., 7559 SC Hengelo (NL)
(72) Inventor: Lammers, Arend, 7558 TV Hengelo (NL); Heilersig, Dinant, 7475 Markelo (NL); Weijers, Lambertus, 7441 Nijverdal (NL)
(74) Representative: Tabeling, Marcella M.J.

(57) **Abstract**

The invention relates to a modular housing for medium voltage switchgear comprising;
- a housing having a number of housing modules arranged in line with each other and two end plates arranged on either side of the housing; and
- medium voltage units arranged separately in each housing module.

## Description

The invention relates to modular housing for medium voltage switchgear.

In case of medium voltage applications, with voltages of 1kV and higher, a housing for switchgear needs to comply with several restrictions.

Medium voltages generate an electrical field. This electrical field needs to be as smooth as possible, as otherwise a risk for flashover occurs. Any object in the vicinity of the medium voltage switchgear will influence this electrical field. Thus, also the housing of the switchgear may influence the electrical field. As a result the walls of the housing are sufficiently spaced from the switchgear to minimize the disturbing influence.

The housing of medium voltage switchgear is preferably also gastight. Because air is used as insulation medium, it is advantageous for proper functioning of the switchgear, that the air quality remains constant. Any moist could reduce the insulation value of the air around the switchgear which could result in flashover. Besides the moist problem, also the intrusion of dust, dirt and even small animals, like mice, should be prevented. By providing a gastight housing, a constant air quality within the housing can be maintained.

The prior art housing of medium voltage switch gear typically provides a housing for a panel. A panel comprises switchgear, for example switches, for the three phases of electrical current. The prior art housing is arranged around and at a suitable spacing of this switchgear.

When two panels are to be arranged next to each other a substantial amount is consumed as each housing should be in each direction at a suitable spacing from the switchgear and thus also in the direction in which the panels are lined up. So, when two conventional housings with switchgear are positioned next to each other, at least one superfluous spacing is present in longitudinal direction.

It is an object of the invention to reduce the above mentioned disadvantages.

This object is achieved with a modular housing for medium voltage switchgear comprising;
- a housing having a number of housing modules arranged in line with each other and two end plates arranged on either side of the housing; and
- medium voltage units arranged separately in each housing module.

The housing can be made to suit the requirements by using housing modules to compose a housing for the medium voltage units. If for example two panels should be provided, the housing is composed out of two housing modules and two end plates. The modular design of the housing ensures that the composed housing minimizes the space requirement, while sufficient spacing is present between the walls of the housing and the medium voltage units.

Preferably, the housing according to the invention comprises sealing means arranged on either side of each housing module. These sealing means ensure that the connection of two adjacent housing modules and of a housing module and an endplate is gastight. The sealing means could comprise a gasket.

In another embodiment of the modular housing according to the invention the sealing means comprise a partition wall having a passage opening. The partition wall provides strength to the connection of two adjacent housing modules, while the passage opening ensures a single chamber, in which the several units are arranged.

Preferably the passage opening substantially corresponds to the longitudinal cross section of the housing. By having the passage opening as large as the longitudinal cross section of the housing, no inwardly protruding ribs are present, which could have a negative effect on the electrical field.

In yet another embodiment of the modular housing according to the invention the partition wall is sealingly welded to the housing modules. Instead of using gaskets or the like, the housing modules could also be welded together. As a result a gastight housing is created, but also due to the welding, a strong housing is provided.

A preferred embodiment of the modular housing according to the invention, comprises at least one clamping rod extending between the two end plates and compressing the end plates and the housing modules in between to a gastight housing.

The clamping rod pulls all the components, like end plates, housing modules and sealing means together such that a gastight housing is created.

In still another embodiment of the modular housing according to any of the preceding claims, wherein the spacing between an end plate and the adjacent medium voltage unit is at least twice the spacing of adjacent medium voltage units. The end plates provide a wall of the housing and have to be at a sufficient spacing in relation to the voltage units in order not to disturb the electrical field and to ensure sufficient air insulation. The medium voltage units in turn can be at a far smaller spacing, because less space is needed for an acceptable electric field.

Yet another embodiment of the modular housing according to the invention comprises three busbars extending through the housing modules, wherein the medium voltage units are electrically connected to at least one of the busbars.

Preferably the medium voltage units comprise a medium voltage switch.

In another preferred embodiment of the modular housing according to the invention, the housing module comprises a tube like element with a constant longitudinal cross section. The tube like element could be bent out of a sheet of metal. It is also possible to embody the housing module out of parts of an extrusion profile.

These and other features of the invention will be elucidated in conjunction with accompanying drawings.
Figure 1 shows a schematic view of a housing configuration according to the prior art.
Figure 2 shows a schematic view of a housing configuration according to the invention.
Figure 3 shows in perspective view a first embodiment of a modular housing according to the invention.
Figure 4 shows in perspective view and with some removed parts a second embodiment of a modular housing according to the invention.
Figure 5 shows in perspective view two parts of the modular housing of figures 3 and 4.

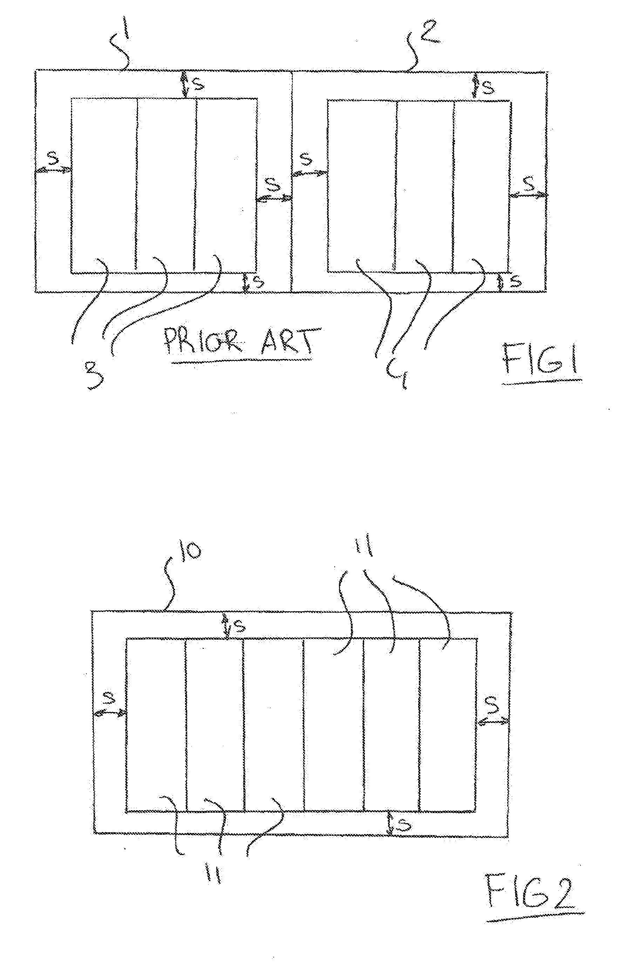

Figure 1 shows schematically prior art housing 1, 2 for medium voltage switchgear. Each housing comprises a fixed number of medium voltage units 3, 4 around which the housing 1, 2 is arranged.

In order not to disturb the electrical field around the medium voltage units 3, 4, the housing 1, 2 is arranged at a spacing s. However, if more medium voltage units 3, 4 are needed, than could be arranged in a single housing 1, 2, a second housing is needed. The second housing 2 is positioned adjacent to the first housing 1.

Figure 2 shows a schematic view of a modular housing 10 according to the invention. Because the housing 10 is modular, the length of the housing 10 can be adjusted to the number of medium voltage units 11 to be arranged in the housing.

As is clear from the comparison with the housing 1, 2 of the prior art the housing 10 according to the invention can be made twice the spacing s shorter, while housing the same number of medium voltage units 11.

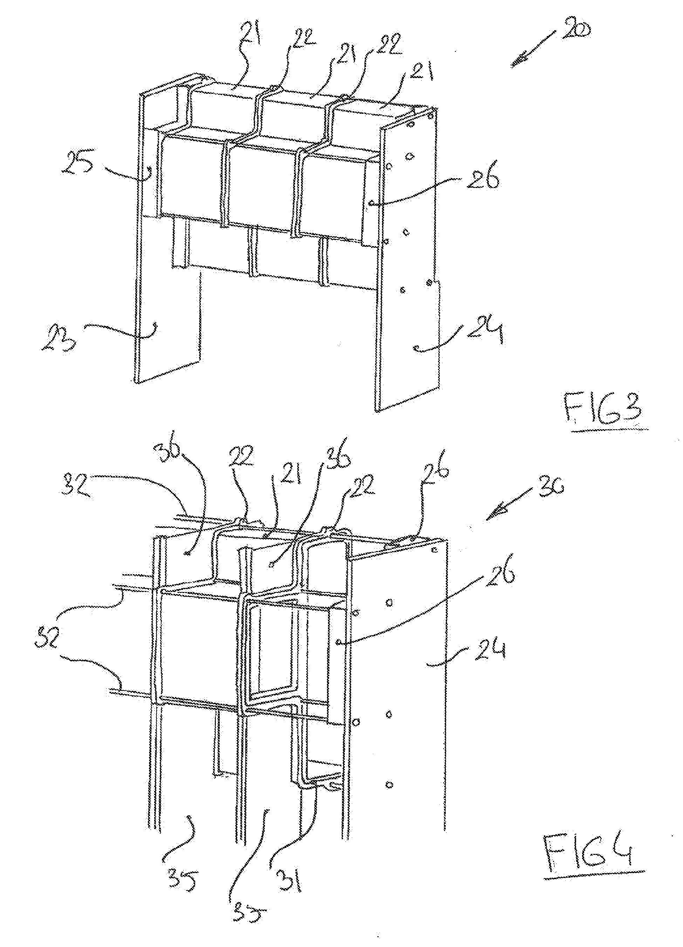

Figure 3 shows in perspective view a first embodiment 20 of the modular housing according to the invention. The modular housing 20 has housing modules 21, which are connected to each other by connection frames 22. The connection frame 22 can comprise for example a gasket for ensuring the gas tightness of the connection between housing modules 21.

Endplates 23, 24 are arranged at each end of the housing 20 to close off the housing 20. To ensure a sufficient spacing of the endplate 23, 24 relative to the medium voltage units housed in the housing 20, an end connection frame 25, 26 is positioned between the respective endplate 23, 24 and the adjacent housing module 21. The width of the end connection frame 25, 26 is adjusted to ensure the required spacing.

Figure 4 shows a perspective view of a second embodiment 30 of the modular housing according to the invention. This second embodiment 30 corresponds partially with the first embodiment 20. Similar parts are therefore designated with the same reference signs.

The modular housing 30 has housing modules 21, of which the one at the right is not shown for clarity of the figure. The housing module 21 are sealed relative to each other by the connection frame 22, This connection frame 22 has a circumferential groove 31, in which a gasket is arranged and in which the edge of the housing module 21 is positioned. Also the end connection frames 25, 26 are in this embodiment provided with a similar circumferential groove and gasket.

The modular housing 30 is made gastight by pulling the several parts 21, 22, 23, 24, 25, 26 together with clamping rods 32. The modular housing 30 furthermore has partition wall elements 35, 36 to externally divide the housing 30 in to sections and to support the several housing modules 21.

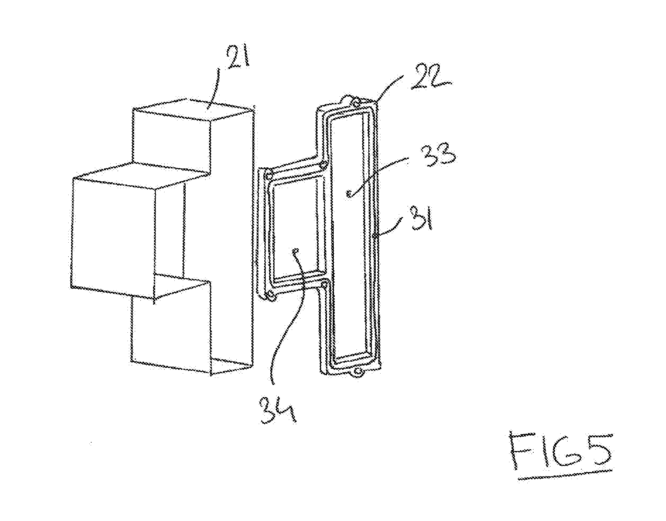

As shown also in figure 5, the sealing means 22 connecting adjacent housing modules 21 and providing a gastight seal have two passage openings 33, 34. These passage openings 33, 34 provide an internal opening, which largely corresponds to the longitudinal cross section of the housing module 21.

The connection frame 22 has along the circumference a number of openings 35 through which the clamping rods 32 can extend.

The housing module 21 as shown for example in figure 5 can be made by bending a metal sheet or by providing an extrusion profile, which is cut to a desired length.

Instead of a separate connection frame and partition wall elements, these elements could also be integrated in a single partition wall, which is provided with suitable passage openings and sealing means. The sealing means can be embodied in a similar way by providing a circumferential groove in the partition wall.

## Claims

1. Modular housing for medium voltage switchgear comprising;
- a housing having a number of housing modules arranged in line with each other and two end plates arranged on either side of the housing; and
- medium voltage units arranged separately in each housing module.

2. Modular housing according to claim 1, comprising sealing means arranged on either side of each housing module.

3. Modular housing according to claim 2, wherein the sealing means comprise a gasket.

4. Modular housing according to claim 2, wherein the sealing means comprise a partition wall having a passage opening.

5. Modular housing according to claim 4, wherein the passage opening substantially corresponds to the longitudinal cross section of the housing.

6. Modular housing according to claim 4 or 5, wherein the partition wall is sealingly welded to the housing modules.

7. Modular housing according to any of the preceding claims, comprising at least one clamping rod extending between the two end plates and compressing the end plates and the housing modules in between to a gastight housing.

8. Modular housing according to any of the preceding claims, wherein the spacing between an end plate and the adjacent medium voltage unit is at least twice the spacing of adjacent medium voltage units.

9. Modular housing according to any of the preceding claims, comprising three busbars extending through the housing modules, wherein the medium voltage units are electrically connected to at least one of the busbars.

10. Modular housing according to claim 9, wherein the medium voltage units comprise a medium voltage switch.

11. Modular housing according to any of the preceding claims, wherein the housing module comprises a tube like element with a constant longitudinal cross section.

12. Modular housing according to claim 11, wherein the tube like element is bent out of a sheet of metal.
